# EUROPÄISCHE PATENTSCHRIFT

(11) **EP 0 470 401 B1**
(45) Veröffentlichungstag und Bekanntmachung des Hinweises auf die Patenterteilung: **07.12.1994**
(21) Anmeldenummer: 91111823.0
(22) Anmeldetag: 16.07.1991
(51) Int. Cl.: B60Q 1/115

(54) **Verfahren und Einrichtung zur Regelung der Leuchtweite eines Kraftfahrzeugs**
Method and means for controlling the lighting distance of a motor vehicle
Procédé et dispositif pour contrôler la distance d'éclairage d'une voiture

(30) Priorität: 06.08.1990 DE 4024916
(43) Veröffentlichungstag der Anmeldung: 12.02.1992
(73) Patentinhaber: Hella KG Hueck & Co., 59552 Lippstadt (DE)
(72) Erfinder: Hussmann, Micha, W-4780 Lippstadt (DE)

(56) Entgegenhaltungen:
- EP-A- 0 355 539
- DE-A- 3 110 094
- DE-A- 3 129 891
- DE-C- 3 827 983

## Beschreibung

Die Erfindung betrifft ein Verfahren zur Regelung der Leuchtweite eines Kraftfahrzeugs, bei dem an einer Stelle der Vorderachse und an einer Stelle der Hinterachse Signale gemessen werden, die von der relativen Stellung der Fahrzeugkarosserie zu der Vorderachse und der Hinterachse abhängen, bei dem eine Differenzbildung der Signale von der Vorderachse zu denen von der Hinterachse durchgeführt wird, bei dem das sich ergebende Differenzsignal als Sollwertsignal durch eine erste Mittelwertbildung gefiltert wird, wobei die Zeit für die erste Mittelwertbildung durch eine erste Filterzeitkonstante bestimmt ist, und bei dem Stellelemente in ihrer Lage geregelt werden, wenn das erste gefilterte Sollwertsignal von einem voreingegebenen oder zuvor eingestellten Wert abweicht, und eine Einrichtung zur Regelung der Leuchtweite eines Kraftfahrzeugs nach dem Oberbegriff des Anspruchs 7.

Ein Verfahren und eine Einrichtung zur Regelung der Leuchtweite eines Kraftfahrzeugs dieser Art ist aus der deutschen Offenlegungsschrift DE-OS 31 10 094 A1 bekannt.

Fühler, die die relative Stellung der Karosserie eines Fahrzeugs zu den Fahrzeugachsen oder Fahrzeugrädern messen, sind an einen Analog-Multiplexer angeschlossen, der die von den Fühlern anliegenden Signale über einen Analog/Digital-Wandler einem Microprozessor zuführt. Eine Filterung der anliegenden Signale erfolgt, indem in einem festgelegten Zeitabstand eine Mittelwertbildung der Signale durchgeführt wird. Dazu wird die Anzahl der einzubeziehenden Meßwerte vorgegeben. Aus den Mittelwerten wird dann für je ein Fühlerpaar, das heißt jeweils einem Vorderachs- und einem Hinterachsfühler, ein Differenzsignal gebildet, das einem Scheinwerfereinstellwert entspricht. Jedes dieser Differenzsignale wird einem Digital/Analog-Wandler zugeführt, der über je einen nachgeschalteten Operationsverstärker mit einer Scheinwerferstelleinrichtung verbunden ist. In Abhängigkeit von dem Vorzeichen der Differenzsignale werden somit Stellelemente vor oder zurück bewegt und Scheinwerferlageregister im Microprozessor hoch- oder heruntergezählt.

Als nachteilig erweist sich hierbei, daß Neigungsänderungen der Fahrzeugkarosserie, die nicht auf eine Veränderung der Beladung oder auf Fahrbahnunebenheiten zurückzuführen sind, nicht erkannt werden, so daß aufgrund der gemessenen Signale von den Achsgebern entsprechend den Neigungsänderungen während z. B. einer Kurvenfahrt die Mittelwertbildung verfälscht wird, wodurch z. B. nach einer Kurvenfahrt Fehleinstellungen der Leuchtweite vorliegen, die zu einer Blendung des Gegenverkehrs oder zu einem Sichtweiteverlust führen, wodurch gefährliche Situationen bei dem Betrieb eines Kraftfahrzeugs herbeigeführt werden.

Als besonders nachteilig erweist sich bei der vorbekannten Einrichtung, daß vier Fühler zur Bestimmung der relativen Stellung der Fahrzeugkarosserie zu den Fahrzeugachsen oder Fahrzeugrädern vorgesehen sind, die über einen Analog-Multiplexer an einen Microprozessor angeschlossen sind, wodurch sich eine aufwendige und mit hohen Kosten verbundene Ausführungsform ergibt, die zudem bei Herstellung und Montage der Einrichtung erhöhten Zeitaufwand und Kosten erfordert.

Aus der deutschen Offenlegungsschrift DE-A-38 27 983 ist ein Verfahren und eine Einrichtung zur Regelung der Leuchtweite eines Kraftfahrzeugs gemäß dem Oberbegriff des Anspruchs 1 bekannt, bei dem die Filterzeitkonstante in Abhängigkeit von der Betriebsdauer und der Betriebsart des Fahrzeugs verändert wird. Für die Änderung der Filterzeitkonstante wird dabei auch die Fahrzeugbeschleunigung herangezogen.

Auch bei dieser bekannten Leuchtweiteregelung erweist sich als nachteilig, daß durch Kurvenfahrten bedingte Neigungsänderungen der Fahrzeugkarosserie, die die Mittelwertbildung verfälschen, nicht berücksichtigt werden, wodurch z. B. nach einer Kurvenfahrt Fehleinstellungen der Leuchtweite vorliegen, die zu einer Blendung des Gegenverkehrs oder zu einem Sichtweiteverlust führen, wodurch gefährliche Situationen bei dem Betrieb eines Kraftfahrzeugs herbeigeführt werden.

Der Erfindung liegt die Aufgabe zugrunde, eine Regelung der Leuchtweite eines Kraftfahrzeugs zu schaffen, die einfach und kostengünstig ist und die Neigungsänderungen der Fahrzeugkarosserie, die nicht auf eine Veränderung, Beladung oder auf Fahrbahnunebenheiten zurückzuführen sind, erkennt und durch diese Neigungsänderungen bedingte Fehleinstellungen bei der Regelung der Leuchtweite vermeidet.

Die Aufgabe wird entsprechend dem Verfahren nach Anspruch 1 erfindungsgemäß dadurch gelöst, daß gleichzeitig zur ersten Mittelwertbildung eine zweite Mittelwertbildung des Sollwertsignals mit einer zweiten kleinen Filterzeitkonstanten und eine dritte Mittelwertbildung des Sollwertsignals mit einer dritten langen Filterzeitkonstanten erfolgt, daß das so erzeugte zweite gefilterte Sollwertsignal mit dem so erzeugten dritten gefilterten Sollwertsignal verglichen wird und daß bei Vorliegen einer Differenz zwischen dem zweiten gefilterten Sollwertsignal und dem dritten gefilterten Sollwertsignal die Regelung von dem ersten gefilterten Sollwertsignal auf das dritte gefilterte Sollwertsignal umgeschaltet wird und nach dem Wegfall einer Differenz wieder von dem dritten gefilterten Sollwertsignal auf das erste gefilterte Sollwertsignal umgeschaltet wird.

Es ist von Vorteil, daß gleichzeitig zur ersten Mittelwertbildung eine zweite Mittelwertbildung des Sollwertsignals mit einer zweiten kleinen Filterzeitkonstante und eine dritte Mittelwertbildung des Sollwertsignals mit einer dritten langen Filterzeitkonstante erfolgt, weil somit auf einfache und kostengünstige Weise ein erstes gefiltertes Sollwertsignal gebildet wird, das von den kurzzeitigen Änderungen der Neigung der Fahrzeugkarosserie abhängt, und ein drittes gefiltertes Sollwertsignal gebildet wird, das von kurzzeitigen Neigungsänderungen der Fahrzeugkarosserie unabhängig oder weitgehend unabhängig ist.

Dadurch, daß das so erzeugte zweite gefilterte Sollwertsignal mit dem so erzeugten dritten gefilterten Sollwertsignal verglichen wird, ergibt sich der Vorteil, daß auf besonders einfache und kostengünstige Weise Neigungsänderungen des Fahrzeugs ermittelt werden können, die nicht auf eine Veränderung der Beladung oder auf Fahrbahnunebenheiten zurückzuführen sind und die z. B. durch eine Kurvenfahrt bedingt sein können, da bei solchen Fahrsituationen je nach den Meßwerten an der Vorderachse und der Hinterachse bei dem Vergleich eine Differenz zwischen dem zweiten gefilterten Sollwertsignal und dem dritten gefilterten Sollwertsignal vorliegt.

In diesem Zusammenhang ist es vorteilhaft, daß bei Vorliegen einer Differenz zwischen dem zweiten gefilterten Sollwertsignal und dem dritten gefilterten Sollwertsignal die Regelung von dem ersten gefilterten Sollwertsignal auf das dritte gefilterte Sollwertsignal umgeschaltet wird und nach dem Wegfall einer Differenz wieder von dem dritten gefilterten Sollwertsignal auf das erste gefilterte Sollwertsignal umgeschaltet wird, weil somit auf einfache und kostengünstige Weise bei dem Vorliegen einer Neigungsänderung der Fahrzeugkarosserie, die nicht auf eine Veränderung der Beladung oder auf Fahrbahnunebenheiten zurückzuführen sind, die Regelung der Leuchtweite des Kraftfahrzeugs in Abhängigkeit von der dritten langen Filterzeitkonstanten erfolgt, wobei das dritte gefilterte Sollwertsignal unabhängig oder weitgehend unabhängig von den störenden kurzzeitigen Neigungsänderungen ist, so daß es nach Neigungsänderungen der Fahrzeugkarosserie, die z. B. durch eine Kurvenfahrt bedingt sind, nicht zu Fehleinstellungen der Leuchtweite kommt, die den Gegenverkehr blenden können oder zu Leuchtweiteverlusten führen können, was eine Gefährdung bei dem Betrieb des Kraftfahrzeugs ausschließt.

Dadurch, daß die erste Filterzeitkonstante kleiner oder gleich der zweiten Filterzeitkonstante ist und daß die dritte Filterzeitkonstante länger als die zweite Filterzeitkonstante ist, ergibt sich der Vorteil, daß zum einen Neigungsänderungen der Fahrzeugkarosserie aufgrund der zweiten kurzen Filterzeitkonstanten sehr schnell erkannt werden und somit eine sehr schnelle Umschaltung bei dem Vorliegen solcher Neigungsänderungen von dem ersten gefilterten Sollwertsignal auf das dritte gefilterte Sollwertsignal erfolgt und zum anderen das dritte gefilterte Sollwertsignal unabhängig oder möglichst unabhängig von den kurzfristigen Neigungsänderungen der Fahrzeugkarosserie ist, wodurch Fehleinstellungen der Leuchtweite bei Neigungsänderungen, die z. B. durch Kurvenfahrten bedingt sind, auf einfache und kostengünstige Weise sicher vermieden werden.

Es ist von Vorteil, daß bei dem Vorliegen einer Differenz zwischen dem zweiten gefilterten Sollwertsignal und dem dritten gefilterten Sollwertsignal die Regelung nur dann von dem ersten gefilterten Sollwertsignal auf das dritte gefilterte Sollwertsignal umgeschaltet wird, wenn das Kraftfahrzeug eine Mindestgeschwindigkeit überschritten hat und/oder keine positive oder negative Beschleunigung des Kraftfahrzeugs vorliegt, weil somit zum einen sichergestellt wird, daß bei einer geringen Geschwindigkeit des Kraftfahrzeugs kurzfristige Änderungen in der Neigung der Fahrzeugkarosserie bei der Regelung der Leuchtweite berücksichtigt werden und zum anderen auch solche Neigungsänderungen der Fahrzeugkarosserie, die nicht auf eine Beschleunigung des Kraftfahrzeugs zurückzuführen sind, erkannt werden und Fehleinstellungen bei der Regelung der Leuchtweite bei so bedingten Neigungsänderungen sicher und kostengünstig vermieden werden.

Dadurch, daß bei Vorliegen einer positiven oder negativen Beschleunigung des Kraftfahrzeugs die Regelung in Abhängigkeit von dem ersten gefilterten Sollwertsignal erfolgt, ergibt sich der Vorteil, daß bei dem Vorliegen einer Beschleunigung des Kraftfahrzeugs die Regelung der Leuchtweite auf jeden Fall in Abhängigkeit von dem ersten gefilterten Sollwertsignal erfolgt, wodurch sichergestellt wird, daß die durch eine Beschleunigung des Kraftfahrzeugs bedingten Neigungsänderungen bestmöglich bei der Regelung der Leuchtweite berücksichtigt werden.

Es ist von Vorteil, daß nach dem Umschalten von dem ersten gefilterten Sollwertsignal auf das dritte gefilterte Sollwertsignal und umgekehrt eine Anpassung des zuletzt eingeschalteten Sollwertsignals an das eingeschaltete Sollwertsignal erfolgt, weil somit auf einfache und kostengünstige Weise Unstetigkeiten und Sprünge in der Einstellung der Leuchtweite vermieden werden. Dies ist erforderlich, da auch dann, wenn z. B. die zweite Filterzeitkonstante beispielhaft etwa 1 Sekunde beträgt und die dritte Filterzeitkonstante beispielhaft etwa 30 Sekunden beträgt, die Zeit für die Erkennung einer Neigungsänderung, die z. B. durch eine Kurvenfahrt bedingt ist, etwa 1 Sekunde erfordert und je nach der Auslegung der ersten Filterzeitkonstanten bei der Umsteuerung eine Differenz zwischen dem ersten gefilterten Sollwertsignal und dem dritten gefilterten Sollwertsignal vorliegen kann. Bei einer solchen Differenz sorgt die Anpassung für eine kontinuierliche Angleichung des zuletzt eingeschalteten Sollwertsignals an das aktuell eingeschaltete Sollwertsignal.

Es ist besonders vorteilhaft, daß die erste Filterzeitkonstante der ersten Mittelwertbildung mit zunehmender positiver oder negativer Beschleunigung des Kraftfahrzeugs auf kürzere Zeiten verringert wird und daß die erste Filterzeitkonstante mit abnehmender positiver oder negativer Beschleunigung des Kraftfahrzeugs auf längere Zeit vergrößert wird, weil somit zum einen eine dynamische Regelung der Leuchtweite des Kraftfahrzeugs ermöglicht wird, die besonders einfach und kostengünstig ist, und bei der sichergestellt wird, daß bei allen Fahrsituationen des Kraftfahrzeugs die Leuchtweite bestmöglich geregelt wird und zum anderen sicherstellt, daß ein schnelles Nachregeln der Stellelemente zur Einstellung der Leuchtweite nur dann erfolgt, wenn dieses unbedingt notwendig ist, wodurch die Lebensdauer der Stellelemente erhöht wird und diese besonders kostengünstig einfach und robust ausgebildet sein können.

Die Aufgabe wird erfindungsgemäß durch die Einrichtung nach Anspruch 7 dadurch gelöst, daß der Sollwertbildner mit einem ersten Filter verbunden ist, der eine erste Filterzeitkonstante aufweist, daß der Sollwertbildner mit einem zweiten Filter verbunden ist, der eine zweite kurze Filterzeitkonstante aufweist, daß der Sollwertbildner mit einem dritten Filter verbunden ist, der eine dritte lange Filterzeitkonstante aufweist, daß der erste Filter oder der dritte Filter über eine Umschalteinrichtung mit dem Regler verbindbar ist, daß der zweite Filter und der dritte Filter mit einem Subtrahierer verbunden sind, daß der Subtrahierer mit einer Kurvenerkennungseinrichtung verbunden ist und daß die Kurvenerkennungseinrichtung bei Vorliegen einer Differenz zwischen den Signalen von dem zweiten Filter und dem dritten Filter die Umschalteinrichtung derart umsteuert, daß der dritte Filter mit dem Regler verbunden ist und bei Wegfall der Differenz der Regler wieder mit dem ersten Filter verbunden wird.

Es ist von Vorteil, daß der Sollwertbildner mit einem ersten Filter verbunden ist, der eine erste Filterzeitkonstante aufweist, weil somit auf einfache und kostengünstige Weise eine bestmögliche Regelung der Leuchtweite bei geeigneter Wahl der ersten Filterzeitkonstanten erfolgt.

Dadurch, daß der Sollwertbildner mit einem zweiten Filter verbunden ist, der eine zweite kurze Filterzeitkonstante aufweist, ergibt sich der Vorteil, daß ein zweites gefiltertes Sollwertsignal gebildet wird, das stark von kurzzeitigen Neigungsänderungen der Fahrzeugkarosserie abhängt.

Als vorteilhaft erweist es sich, daß der Sollwertbildner mit einem dritten Filter verbunden ist, der eine dritte lange Filterzeitkonstante aufweist, weil somit ein drittes gefiltertes Sollwertsignal gebildet wird, das unabhängig oder weitgehend unabhängig von kurzzeitigen Neigungsänderungen der Fahrzeugkarosserie ist.

Es ist von Vorteil, daß der erste Filter oder der dritte Filter über eine Umschalteinrichtung mit dem Regler verbindbar ist, weil somit je nach vorliegender Betriebsbedingung des Kraftfahrzeugs die Regelung der Leuchtweite in Abhängigkeit von dem ersten gefilterten Sollwertsignal oder von dem dritten gefilterten Sollwertsignal erfolgen kann.

Dadurch, daß der zweite Filter und der dritte Filter mit einem Subtrahierer verbunden sind und daß der Subtrahierer mit einer Kurvenerkennungseinrichtung verbunden ist, ergibt sich der Vorteil, daß Neigungsänderungen der Fahrzeugkarosserie, die nicht auf eine Veränderung der Beladung oder auf Fahrbahnunebenheiten zurückzuführen sind, auf besonders einfache und kostengünstige Weise erkannt werden können, da in Abhängigkeit von den Einbauorten des Vorderachsgebers und des Hinterachsgebers z. B. bei einer Kurvenfahrt an dem Ausgang des Subtrahierers eine Differenz vorliegt, die eine Neigungsänderung der Fahrzeugkarosserie nachweist, die nicht durch eine Beladungsänderung oder durch Fahrbahnunebenheiten bedingt ist. In diesem Zusammenhang ist es besonders vorteilhaft, daß die Kurvenerkennungseinrichtung bei Vorliegen einer Differenz zwischen den Signalen von dei zweiten Filter und dem dritten Filter die Umschalteinrichtung derart umsteuert, daß der dritte Filter mit dem Regler verbunden ist, und bei Wegfall der Differenz der Regler wieder mit dem ersten Filter verbunden ist, weil somit auf besonders einfache und kostengünstige Weise bei dem Erkennen einer Neigungsänderung, die nicht auf eine Beladungsänderung und/oder auf Fahrbahnunebenheiten zurückzuführen ist, die Regelung der Leuchtweite aufgrund der dritten langen Filterzeitkonstanten und des somit gebildeten dritten gefilterten Sollwertsignals erfolgt, und nicht aufgrund des ersten gefilterten Sollwertsignals, welches je nach der Dauer und der Art der Neigungsänderung durch die so bedingten Neigungsänderungen verfälscht sein kann, so daß bei einer Regelung der Leuchtweite in Abhängigkeit von dem dritten gefilterten Sollwertsignal Fehleinstellungen der Leuchtweite vermieden werden, die nach z. B. einer Kurvenfahrt zu einer Blendung des Gegenverkehrs oder zu Sichtweiteverlusten führen und gefährliche Situationen bei dem Betrieb des Kraftfahrzeugs herbeiführen.

Es ist von Vorteil, daß die erste filterzeitkonstante kleiner oder gleich der zweiten Filterzeitkonstante ist, und daß die dritte Filterzeitkonstante länger als die zweite Filterzeitkonstante ist, weil somit zum einen sichergestellt wird, daß Neigungsänderungen der Fahrzeugkarosserie, die nicht auf eine Änderung der Beladung oder auf Fahrbahnunebenheiten zurückzuführen sind, schnellstmöglich erkannt werden und zum anderen ein drittes gefiltertes Sollwertsignal zur Verfügung gestellt wird, das unabhängig oder weitgehend unabhängig von kurzzeitigen Änderungen der Neigung der Fahrzeugkarosserie ist und aufgrund dessen eine Regelung der Leuchtweite erfolgen kann, die Fehleinstellungen bestmöglich vermeidet.

Dadurch, daß die Kurvenerkennungseinrichtung zum einen mit einem Geschwindigkeitssignalbildner und zum anderen mit einem Beschleunigungssignalbildner verbunden ist und daß die Kurvenerkennungseinrichtung eine Geschwindigkeitsschwellwerteinrichtung aufweist, ergibt sich der Vorteil, daß zum einen bei geringen Geschwindigkeiten des Kraftfahrzeugs die Regelung immer in Abhängigkeit von dem ersten gefilterten Sollwertsignal erfolgt, wodurch sich eine bestmögliche Einstellung der Leuchtweite bei allen Neigungsänderungen der Fahrzeugkarosserie ergibt und zum anderen auch solche Neigungsänderungen der Fahrzeugkarosserie, die nicht auf eine Änderung der Beschleunigung zurückzuführen sind, sicher und zuverlässig erkannt werden und bei der Umsteuerung berücksichtigt werden, wodurch Fehleinstellungen der Leuchtweite noch besser vermieden werden.

Dadurch, daß die Umschalteinrichtung mit dem Beschleunigungssignalbildner verbunden ist, der den Regler über die Umschalteinrichtung mit dem ersten Filter verbindet, wenn eine Beschleunigung des Kraftfahrzeugs vorliegt, ergibt sich der Vorteil, daß bei Vorliegen einer Beschleunigung des Kraftfahrzeugs die Regelung der Leuchtweite immer in Abhängigkeit von dem ersten gefilterten Sollwertsignal steht, wodurch eine bestmögliche kurzzeitige Regelung der Leuchtweite bei durch Beschleunigung bedingten Neigungsänderungen der Fahrzeugkarosserie erreicht wird.

Es ist besonders vorteilhaft, daß der Beschleunigungssignalbildner mit dem ersten Filter verbunden ist und daß die erste Filterzeitkonstante mit zunehmender positiver oder negativer Beschleunigung des Kraftfahrzeugs auf kürzere Zeiten verringert wird und mit abnehmender positiver oder negativer Beschleunigung auf längere Zeiten vergrößert wird, weil somit auf besonders einfache und kostengünstige Weise sichergestellt wird, daß in Abhängigkeit von allen auftretenden Fahrsituationen eine dynamische Regelung der Leuchtweite erfolgt, die dem jeweiligen Betriebszustand des Kraftfahrzeugs bestmöglich angepaßt ist. So werden bei großen positiven oder negativen Beschleunigungen des Kraftfahrzeugs kürzere Filterzeitkonstanten wirksam, die sicherstellen, daß die bei großen Beschleunigungen auftretenden starken Neigungsänderungen der Fahrzeugkarosserie bei der Regelung der Leuchtweite möglichst schnell berücksichtigt und ausgeglichen werden.

Als besonders vorteilhaft erweist sich dabei, daß bei dem Vorliegen nur geringer Beschleunigungen oder keiner Beschleunigung des Kraftfahrzeugs die Regelung der Leuchtweite in Abhängigkeit von langen Filterzeitkonstanten erfolgt, wodurch die Lebensdauer der Stellelemente zur Einstellung der Leuchtweite erhöht wird und diese zudem in kostengünstiger Weise möglichst einfach und robust aufgebaut sein können.

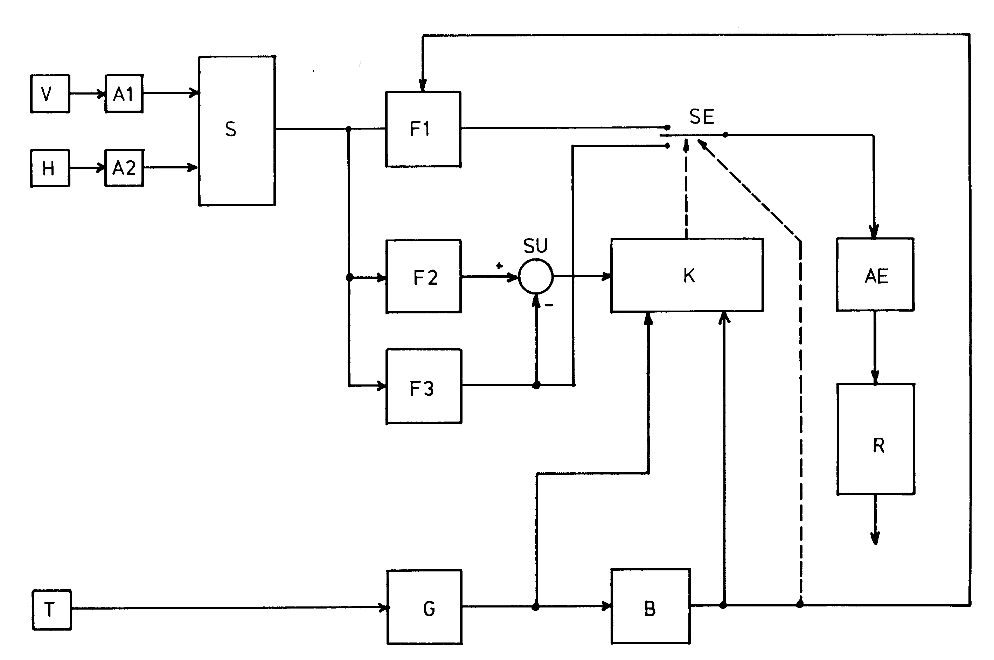

Ein Ausführungsbeispiel der Erfindung ist in der einzigen Zeichnung dargestellt und wird im folgenden anhand dieser Zeichnung näher beschrieben.

Die einzige Figur zeigt ein Blockschaltbild einer erfindungsgemäßen Einrichtung zur Regelung der Leuchtweite eines Kraftfahrzeugs.

Ein Vorderachsgeber (V) ist hier über einen ersten Analog/Digital-Wandler (A1) mit einem Sollwertbildner (S) verbunden. Der Sollwertbildner (S) ist zudem über einen zweiten Analog/Digital-Wandler (A2) mit einem Hinterachsgeber (H) verbunden. Der Vorderachsgeber und der Hinterachsgeber (H) erzeugen Signale, die von der relativen Stellung der Fahrzeugkarosserie zu der Vorderachse und der Hinterachse abhängen. Der Sollwertbildner (S) bildet die Differenz der Signale von dem Vorderachsgeber (V) und dem Hinterachsgeber (H) und multipliziert das so erhaltene Differenzsignal je nach der gewählten Ausführungsform und den Erfordernissen mit einem Korrekturfaktor. Das so gebildete Sollwertsignal wird einem ersten Filter (F1), einem zweiten Filter (F2) und einem dritten Filter (F3) zugeführt. Der erste Filter (F1) führt eine erste Mittelwertbildung in Abhängigkeit von einer ersten Filterzeitkonstanten durch, die variabel oder fest ist, und sicherstellt, daß die Regelung der Leuchtweite des Kraftfahrzeugs bestmöglich erfolgt.

Der zweite Filter (F2) führt eine zweite Mittelwertbildung mit einer zweiten kurzen Filterzeitkonstanten durch, wodurch ein zweites gefiltertes Sollwertsignal gebildet wird, das stark von kurzzeitigen Änderungen in dem Niveau der Fahrzeugkarosserie abhängt. Der dritte Filter (F3) führt eine dritte Mittelwertbildung durch, die von einer dritten langen Filterzeitkonstanten abhängt und bildet somit ein drittes gefiltertes Sollwertsignal, das unabhängig oder weitgehend unabhängig von kurzzeitigen Änderungen der Neigung der Fahrzeugkarosserie ist. Damit kurzzeitige Änderungen in dem Niveau der Fahrzeugkarosserie erkannt werden können, beträgt die zweite kurze Filterzeitkonstante beispielhaft etwa 1 Sekunde. Damit das dritte gefilterte Sollwertsignal möglichst unabhängig von kurzzeitigen Änderungen in dem Niveau der Fahrzeugkarosserie ist, beträgt die dritte lange Filterzeitkonstante hier beispielhaft etwa mehrere Minuten. Die Filterzeitkonstanten können dabei je nach dem Anwendungsfall kürzer oder länger gewählt werden.

Der erste Filter (F1) und der dritte Filter (F3) sind jeweils mit einer Umschalteinrichtung (SE) verbunden, die den ersten Filter (F1) oder den dritten Filter (F3) mit dem Regler (R) verbinden kann. Der Regler (R) regelt die Lage von Stellelementen, die hier nicht gezeigt werden, die die Lage von Scheinwerfern verändern.

Der zweite Filter (F2) und der dritte Filter (F3) sind elektrisch leitend mit einem Subtrahierer (SU) verbunden, wobei das zweite gefilterte Sollwertsignal hier beispielhaft dem Subtrahierer (SU) mit positiven Vorzeichen zugeführt wird und das dritte gefilterte Sollwertsignal von dem dritten Filter (F3) dem Subtrahierer (SU) hier beispielhaft mit negativen Vorzeichen zugeführt wird. Der Subtrahierer (SU) bildet die Differenz der gefilterten Sollwertsignale von dem zweiten Filter (F2) und dem dritten Filter (F3). Der Subtrahierer (SU) ist elektrisch leitend mit einer Kurvenerkennungseinrichtung (K) verbunden, dem das Differenzsignal zugeführt wird. Die Kurvenerkennungseinrichtung (K) ist elektrisch leitend mit der Umschalteinrichtung (SE) verbunden und verbindet den dritten Filter (F3) elektrisch leitend mit dem Regler (R), wenn ihm von dem Subtrahierer (SU) ein Differenzsignal ungleich 0 zugeführt wird. Liegt kein Differenzsignal von dem Subtrahierer (SU) vor, so schaltet die Kurvenerkennungseinrichtung (K) die Umschalteinrichtung (SE) um, so daß der erste Filter (F1) mit dem Regler (R) verbunden ist.

Die Kurvenerkennungseinrichtung (K) ist elektrisch leitend mit einem Geschwindigkeitssignalbildner (G) verbunden und weist eine Geschwindigkeitsschwellwerteinrichtung auf, die sich auf die Umschaltung derart auswirkt, daß der dritte Filter (F3) nur dann mit dem Regler (R) verbunden wird, wenn eine Mindestgeschwindigkeit des Kraftfahrzeugs überschritten wird. Zur Bildung eines Geschwindigkeitssignals ist der Geschwindigkeitssignalbildner (G) elektrisch leitend mit einem Tachosignalgeber (T) verbunden.

Die Kurvenerkennungseinrichtung (K) ist zudem elektrisch leitend mit einem Beschleunigungssignalbildner (B) verbunden, wobei das Signal von dem Beschleunigungssignalbildner (B) derart ausgenutzt wird, daß der dritte Filter (F3) nur dann mit dem Regler (R) verbunden wird, wenn keine Beschleunigung des Kraftfahrzeugs vorliegt. Der Beschleunigungssignalbildner (B) ist zudem elektrisch leitend mit der Umschalteinrichtung (SE) verbunden und verbindet über die Umschalteinrichtung (SE) immer dann den ersten Filter (F1) mit dem Regler (R), wenn eine Beschleunigung des Kraftfahrzeugs vorliegt. Diese Umsteuerung kann dabei auch in Abhängigkeit von vorgegebenen Schwellwerten vorgenommen werden.

Weiterhin ist der Beschleunigungssignalbildner (B), der hier beispielhaft mit dem Geschwindigkeitssignalbildner (G) verbunden ist, beispielhaft mit dem ersten Filter (F1) verbunden und steuert dieses derart an, daß die erste Filterzeitkonstante des ersten Filters (F1) mit zunehmender positiver oder negativer Beschleunigung des Kraftfahrzeugs auf kürzere Zeiten verringert wird und mit abnehmender positiver oder negativer Beschleungigung auf längere Zeiten vergrößert wird, wodurch sich eine bestmögliche, den der jeweiligen Fahrzeugbetriebsbedingungen angepaßte Regelung der Leuchtweite ohne Blendeinwirkungen oder Sichtweiteverluste ergibt.

In der Verbindung zwischen der Umschalteinrichtung (SE) und dem Regler (R) ist hier beispielhaft eine Anpaßeinrichtung (AE) angeordnet, die bei einer Umschaltung durch die Umschalteinrichtung (SE) die unterschiedlichen Sollwerte aneinander angleicht, damit Unstetigkeiten oder Sprünge in der Einstellung und Regelung der Leuchtweite vermieden werden.

Im folgenden wird anhand der einzigen Figur das Verfahren zur Regelung der Leuchtweite eines Kraftfahrzeugs näher beschrieben.

Der Vorderachsgeber (V) und der Hinterachsgeber (H) bilden Signale, die von der relativen Stellung der Fahrzeugkarosserie zu der Vorderachse und der Hinterachse abhängen. Diese analogen Signale werden durch die Analog/Digital-Wandler (A1, A2) in digitale Signale umgesetzt und dem Sollwertbildner (S) zugeführt. Der Sollwertbildner (S) bildet die Differenz der digitalen Signale von dem Vorderachsgeber (V) und dem Hinterachsgeber (V) und multipliziert diese je nach Anforderungen mit einem Korrekturwert.

Das auf diese Weise gebildete Sollwertsignal wird einem ersten Filter (F1) zugeführt, der mittels einer ersten Filterzeitkonstanten eine erste Mittelwertbildung durchführt und somit ein erstes gefiltertes Sollwertsignal bildet. Dieses erste gefilterte Sollwertsignal wird dem Regler (R) zur Regelung der Leuchtweite des Kraftfahrzeugs zugeführt. Um eine bestmögliche Regelung der Leuchtweite zu erreichen, ist die erste Filterzeitkonstante des ersten Filters (F1) von der Beschleunigung des Kraftfahrzeugs abhängig. Mit zunehmender positiver oder negativer Beschleunigung des Kraftfahrzeugs werden kürzere Filterzeitkonstanten wirksam geschaltet und mit abnehmender positiver oder negativer Beschleunigung des Kraftfahrzeugs werden längere filterzeitkonstanten wirksam geschaltet.

Gleichzeitig mit der ersten Mittelwertbildung durch den ersten Filter (F1) führt ein zweiter Filter (F2) eine zweite Mittelwertbildung und führt ein dritter Filter (F3) eine dritte Mittelwertbildung durch. Der zweite Filter (F2) weist dabei eine zweite kurze Filterzeitkonstante auf, und bildet ein zweites gefiltertes Sollwertsignal, das kurzfristige Änderungen in dem Niveau des Kraftfahrzeugs wiedergibt. Der dritte Filter (F3) weist eine dritte lange Filterzeitkonstante auf und bildet ein drittes gefiltertes Sollwertsignal, das unabhängig oder weitgehend unabhängig von kurzzeitigen Änderungen des Niveaus der Fahrzeugkarosserie ist. Durch einen Vergleich des zweiten gefilterten Sollwertsignals mit dem dritten gefilterten Sollwertsignal wird festgestellt, ob zwischen diesen Signalen eine Differenz vorliegt. Eine Differenz ist ein Indiz für eine Neigungsänderung der Fahrzeugkarosserie, die nicht auf eine Veränderung der Beladung oder auf Fahrbahnunebenheiten zurückzuführen ist und zum Beispiel durch Kurvenfahrten erzeugt wird. Liegt eine solche Differenz, für die auch Schwellwerte vorgegeben werden können, vor, so steuert die Kurvenerkennungseinrichtung (K) eine Umschalteinrichtung um, indem die Verbindung zwischen dem ersten Filter (F1) und dem Regler (R) unterbrochen wird und der dritte Filter (F3) mit dem Regler (R) verbunden wird. Ist die Differenz zwischen dem zweiten gefilterten Sollwertsignal und dem dritten gefilterten Sollwertsignal gleich 0, so steuert die Kurvenerkennungseinrichtung (K) die Umschalteinrichtung (SE) derart um, daß die Verbindung zwischen dem dritten Filter (F3) und dem Regler (R) geöffnet wird und der erste Filter (F1) mit dem Regler (R) in Verbindung gesetzt wird.

Die zweite Filterzeitkonstante kann beispielhaft etwa 1 Sekunde betragen, während die dritte Filterzeitkonstante beispielhaft etwa 3 Minuten betragen kann. Diese Zeiten können je nach Anwendungsfall kleiner oder größer sein. Die erste Filterzeitkonstante kann beispielhaft kleiner oder gleich der zweiten Filterzeitkonstante und kleiner als die dritte Filterzeitkonstante sein.

Da sich je nach den Betriebsbedingungen des Kraftfahrzeugs das erste gefilterte Sollwertsignal von dem dritten gefilterten Sollwertsignal stark unterscheiden kann, zudem je nach der eingestellten zweiten kurzen Filterzeitkonstante die Zeit bis zur Erkennung, z. B. einer Kurvenfahrt, eine Verzögerung in der Umschaltung durch die Umschalteinrichtung (SE) bewirkt werden kann, ist in der Verbindung zwischen der Umschalteinrichtung (SE) und dem Regler (R) eine Anpaßeinrichtung (AE) eingefügt, die bei einer Umschaltung durch die Umschalteinrichtung (SE) den zuvor eingeschalteten gefilterten Sollwert dem aktuell eingeschalteten gefilterten Sollwert angleichen, um Sprünge und Unstetigkeiten in der Einstellung und Regelung der Leuchtweite zu vermeiden.

Damit bei geringen Geschwindigkeiten alle Neigungsänderungen der Kraftfahrzeugkarosserie für die Regelung der Leuchtweite berücksichtigt werden, bleibt unterhalb einer Mindestgeschwindigkeit, die durch die Kurvenerkennungseinrichtung (K) festgelegt wird, der erste Filter (F1) mit dem Regler (R) verbunden.

Damit auch solche Neigungsänderungen der Fahrzeugkarosserie erkannt werden, die nicht auf eine Beschleunigungsänderung zurückzuführen sind, und Fehleinstellungen bei der Regelung der Leuchtweite aufgrund solcher Neigungsänderungen vermieden werden, wird der dritte Filter (F3) nur dann mit dem Regler in Verbindung gesetzt, wenn keine Beschleunigung des Kraftfahrzeugs vorliegt.

Bei einem anderen Ausführungsbeispiel des Erfindungsgegenstands kann das digitalisierte Signal des Vorderachsgebers (V) direkt dem zweiten Filter (F2) zugeführt werden und kann das digitalisierte Signal des Hinterachsgebers (H) direkt dem dritten Filter (F3) zugeführt werden, wodurch sich eine andere kostengünstige Einrichtung zur Regelung der Leuchtweite eines Kraftfahrzeugs ergibt, bei der Neigungsänderungen der Karosserie, die z. B. durch Kurvenfahrten bedingt sind, einfach und kostengünstig erkannt werden können und dadurch bedingte Fehleinstellungen der Leuchtweite vermieden werden können.

## Patentansprüche

1. Verfahren zur Regelung der Leuchtweite eines Kraftfahrzeugs, bei dem an einer Stelle der Vorderachse und an einer Stelle der Hinterachse Signale gemessen werden, die von der relativen Stellung der Fahrzeugkarosserie zu der Vorderachse und der Hinterachse abhängen, bei dem eine Differenzbildung der Signale von der Vorderachse zu denen von der Hinterachse durchgeführt wird, bei dem das sich ergebende Differenzsignal als Sollwertsignal durch eine erste Mittelwertbildung gefiltert wird, wobei die Zeit für die erste Mittelwertbildung durch eine erste Filterzeitkonstante bestimmt ist, und bei dem Stellelemente in ihrer Lage geregelt werden, wenn das erste gefilterte Sollwertsignal von einem vorgegebenen und zuvor eingestellten Wert abweicht, dadurch gekennzeichnet, daß gleichzeitig zur ersten Mittelwertbildung eine zweite Mittelwertbildung des Sollwertsignals mit einer zweiten kleinen Filterzeitkonstante und eine dritte Mittelwertbildung des Sollwertsignals mit einer dritten langen Filterzeitkonstante erfolgt, daß das so erzeugte zweite gefilterte Sollwertsignal mit dem so erzeugten dritten gefilterten Sollwertsignal verglichen wird und daß bei Vorliegen einer Differenz zwischen dem zweiten gefilterten Sollwertsignal und dem dritten gefilterten Sollwertsignal die Regelung von dem ersten gefilterten Sollwertsignal auf das dritte gefilterte Sollwertsignal umgeschaltet wird und nach dem Wegfall einer Differenz wieder von dem dritten gefilterten Sollwertsignal auf das erste gefilterte Sollwertsignal umgeschaltet wird.

2. Verfahren nach Anspruch 1, dadurch gekennzeichnet, daß die erste Filterzeitkonstante kleiner oder gleich der zweiten Filterzeitkonstante ist und daß die dritte Filterzeitkonstante länger als die zweite Filterzeitkonstante ist.

3. Verfahren nach Anspruch 2, dadurch gekennzeichnet, daß bei Vorliegen einer Differenz zwischen dem zweiten gefilterten Sollwertsignal und dem dritten gefilterten Sollwertsignal die Regelung nur dann von dem ersten gefilterten Sollwertsignal auf das dritte gefilterte Sollwertsignal umgeschaltet wird, wenn das Kraftfahrzeug eine Mindestgeschwindigkeit überschritten hat und/oder keine positive oder negative Beschleunigung des Kraftfahrzeugs vorliegt.

4. Verfahren nach Anspruch 3, dadurch gekennzeichnet, daß bei Vorliegen einer positiven oder negativen Beschleunigung des Kraftfahrzeugs die Regelung in Abhängigkeit von dem ersten gefilterten Sollwertsignal erfolgt.

5. Verfahren nach Anspruch 4, dadurch gekennzeichnet, daß nach dem Umschalten von dem ersten gefilterten Sollwertsignal auf das dritte gefilterte Sollwertsignal und umgekehrt eine Anpassung des zuletzt eingeschalteten Sollwertsignals an das eingeschaltete Sollwertsignal erfolgt.

6. Verfahren nach mindestens einem der vorstehenden Ansprüche, dadurch gekennzeichnet, daß die erste Filterzeitkonstante der ersten Mittelwertbildung mit zunehmender positiver oder negativer Beschleunigung des Kraftfahrzeugs auf kürzere Zeiten verringert wird und daß die erste Filterzeitkonstante mit abnehmender positiver oder negativer Beschleunigung des Kraftfahrzeugs auf längere Zeiten vergrößert wird.

7. Einrichtung zur Regelung der Leuchtweite eines Kraftfahrzeugs mit einem Vorderachsgeber und einem Hinterachsgeber, die Signale in Abhängigkeit von der Lage der Fahrzeugkarosserie zu der Vorderachse und der Hinterachse bilden, mit einem Sollwertbildner, der die Differenz aus den Signalen von dem Vorderachsgeber und dem Hinterachsgeber bildet, mit einem ersten Filter, der eine erste Mittelwertbildung der Sollwerte durchführt, und mit einem Regler, der in Abhängigkeit von den gefilterten Sollwerten die Lage von Stellelementen zur Einstellung der Leuchtweite des Kraftfahrzeugs regelt, dadurch gekennzeichnet, daß der Sollwertbildner (S) mit einem ersten Filter (F1) verbunden ist, der eine erste Filterzeitkonstante aufweist, daß der Sollwertbildner (S) mit einem zweiten Filter (F2) verbunden ist, der eine zweite kurze Filterzeitkonstante aufweist, daß der Sollwertbildner (S) mit einem dritten Filter (F3) verbunden ist, der eine dritte lange Filterzeitkonstante aufweist, daß der erste Filter (F1) oder der dritte Filter (F3) über eine Umschalteinrichtung (SE) mit dem Regler (R) verbindbar ist, daß der zweite Filter (F2) und der dritte Filter (F3) mit einem Subtrahierer (SU) verbunden sind, daß der Subtrahierer (SU) mit einer Kurvenerkennungseinrichtung (K) verbunden ist und daß die Kurvenerkennungseinrichtung (K) bei Vorliegen einer Differenz zwischen den Signalen von dem zweiten Filter (F2) und dem dritten Filter (F3) die Umschalteinrichtung (SE) derart umsteuert, daß der dritte Filter (F3) mit dem Regler (R) verbunden ist und bei Wegfall der Differenz der Regler (R) wieder mit dem ersten Filter (F1) verbunden wird.

8. Einrichtung nach Anspruch 7, dadurch gekennzeichnet, daß die erste Filterzeitkonstante kleiner oder gleich der zweiten Filterzeitkonstante ist und daß die dritte Filterzeitkonstante länger als die zweite Filterzeitkonstante ist.

9. Einrichtung nach Anspruch 8, dadurch gekennzeichnet, daß die Kurvenerkennungseinrichtung (K) zum einen mit einem Geschwindigkeitssignalbildner (G) und zum anderen mit einem Beschleunigungssignalbildner (B) verbunden ist und daß die Kurvenerkennungseinrichtung (K) eine Geschwindigkeitsschwellwerteinrichtung aufweist.

10. Einrichtung nach Anspruch 9, dadurch gekennzeichnet, daß die Umschalteinrichtung (SE) mit dem Beschleunigungsignalbildner (B) verbunden ist, der den Regler (R) über die Umschalteinrichtung (SE) mit dem ersten Filter (F1) verbindet, wenn eine Beschleunigung des Kraftfahrzeugs vorliegt.

11. Einrichtung nach mindestens einem der vorstehenden Ansprüche, dadurch gekennzeichnet, daß der Beschleunigungssignalbildner (B) mit dem ersten Filter (F1) verbunden ist und daß die erste Filterzeitkonstante mit zunehmender positiver oder negativer Beschleunigung des Kraftfahrzeugs auf kürzere Zeiten verringert wird und mit abnehmender positiver oder negativer Beschleunigung auf längere Zeiten vergrößert wird.

## Claims

1. A method of controlling the beam range of a motor vehicle, wherein signals which depend on the relative position of the vehicle bodywork to the front axle and to the rear axle are measured at a point on the front axle and at a point on the rear axle, wherein a difference formation is effected of the signals from the front axle in relation to those from the rear axle, wherein the resulting differential signal is filtered as a set value signal by means of a first averaging operation, wherein the time for the first averaging operation is determined by a first filter time constant, and wherein the position of control elements is regulated when the first filtered set value signal differs from a predetermined previously adjusted value, characterised in that simultaneously with the first averaging operation a second averaging of the set value signal is performed using a second, small filter time constant, and a third averaging of the set value signal is performed using a third, long filter time constant, that the second, filtered average value signal produced in this manner is compared with the third, filtered set value average value signal produced in this manner, and that when a difference exists between the second, filtered set value signal and the third, filtered set value signal control is switched from the first, filtered set value signal to the third, filtered set value signal and after a difference ceases to exist it is switched from the third, filtered set value signal to the first, filtered set value signal again.

2. A method according to claim 1, characterised in that the first filter time constant is less than or equal to the second filter time constant, and that the third filter time constant is longer than the second filter time constant.

3. A method according to claim 2, characterised in that when a difference exists between the second, filtered set value signal and the third, filtered set value signal control is only switched from the first, filtered set value signal to the third, filtered set value signal when the motor vehicle has exceeded a minimum speed and/or when there is no positive or negative acceleration of the motor vehicle.

4. A method according to claim 3, characterised in that when there is a positive or negative acceleration of the motor vehicle control is effected in accordance with the first, filtered set value signal.

5. A method according to claim 4, characterised in that after switching from the first, filtered set value signal to the third, filtered set value signal and vice versa the last set value signal put in is matched to the set value signal put in.

6. A method according to at least one of the preceding claims, characterised in that the first filter time constant of the first averaging operation is reduced to shorter time values with increasing positive or negative acceleration of the motor vehicle, and that the first filter time constant is increased to longer time values with decreasing positive or negative acceleration of the motor vehicle.

7. A device for controlling the beam range of a motor vehicle, having a front axle transmitter and a rear axle transmitter which form signals depending on the position of the vehicle bodywork in relation to the front axle and to the rear axle, having a set value former which forms the difference from the signals from the front axle transmitter and the rear axle transmitter, having a first filter which effects a first averaging of the set values, and having a controller which controls the position of control elements in accordance with the filtered set values in order to adjust the beam range of the motor vehicle, characterised in that the set value former (S) is connected to a first filter (F1) which has a first filter time constant, that the set value former (S) is connected to a second filter (F2) which has a second, short filter time constant, that the set value former (S) is connected to a third filter (F3) which has a third, long filter time constant, that the first filter (F1) or the third filter (F3) can be connected to the controller (R) via a switching device (SE), that the second filter (F2) and the third filter (F3) are connected to a subtracter (SU), that the subtracter (SU) is connected to a curve recognition device (K), and that when a difference exists between the signals from the second filter (F2) and the third filter (F3) the curve recognition device (K) reverses the switching device (SE) so that the third filter (F3) is connected to the controller (R) and when the difference ceases to exist the controller (R) is connected to the first filter (F1) again.

8. A device according to claim 7, characterised in that the first filter time constant is less than or equal to the second filter time constant and that the third filter time constant is longer than the second filter time constant.

9. A device according to claim 8, characterised in that the curve recognition device (K) is connected firstly to a speed signal former (G) and secondly to an acceleration signal former (B), and that the curve recognition device (K) comprises a speed threshold device.

10. A device according to claim 9, characterised in that the switching device (SE) is connected to the acceleration signal former (B) which connects the controller to the first filter (F1) via the switching device (SE) when there is an acceleration of the motor vehicle.

11. A device according to at least one of the preceding claims, characterised in that the acceleration signal former (B) is connected to the first filter (F1) and that the first filter time constant is reduced to shorter time values with increasing positive or negative acceleration of the motor vehicle and is increased to longer time values with decreasing positive or negative acceleration.

## Revendications

1. Procédé de réglage de la portée des phares d'un véhicule à moteur, dans le cas duquel on mesure, en un endroit de l'essieu avant et en endroit de l'essieu arrière, des signaux qui dépendent de la position relative de la carrosserie du véhicule par rapport à l'essieu avant et par rapport à l'essieu arrière, dans le cas duquel on procède à une formation de la différence entre les signaux de l'essieu avant et ceux de l'essieu arrière, dans le cas duquel on filtre le signal de différence, qui en résulte, en tant que signal de valeur prescrite, par formation d'une première valeur moyenne, étant précisé que la durée pour la formation de cette première valeur moyenne est déterminée par une première constante de temps de filtre et dans le cas duquel on règle la position d'éléments réglants lorsque le premier signal de valeur prescrite, filtré, s'écarte d'une valeur prédéterminée et précédemment définie, procédé caractérisé par le fait qu'en même temps que la formation d'une première valeur moyenne, se font la formation d'une seconde valeur moyenne du signal de valeur prescrite avec une seconde constante de temps de filtre, petite, et la formation d'une troisième valeur moyenne du signal de valeur prescrite, avec une troisième constante de temps de filtre, grande, par le fait que l'on compare le second signal de valeur prescrite, filtré, ainsi obtenu, avec le troisième signal de valeur prescrite, filtré, ainsi obtenu, et qu'en présence d'une différence entre le second signal de valeur prescrite, filtré, et le troisième signal de valeur prescrite, filtré, en commute la régulation pour passer, du premier signal de valeur prescrite, filtré, au troisième signal de valeur prescrite, filtré, et qu'après la disparition d'une différence, on commute à nouveau pour passer, du troisième signal de valeur prescrite, filtré, au premier signal de valeur prescrite, filtré.

2. Procédé selon la revendication 1, caractérisé par le fait que la première constante de temps de filtre est inférieure ou égale à la seconde constante de temps de filtre et que la troisième constante de temps de filtre est supérieure à la seconde constante de temps de filtre.

3. Procédé selon la revendication 2, caractérisé par le fait qu'en présence d'une différence entre le second signal de valeur prescrite, filtré, et le troisième signal de valeur prescrite, filtré, on ne commute la régulation, pour passer du premier signal de valeur prescrite, filtré, au troisième signal de valeur prescrite, filtré, que lorsque le véhicule à moteur a dépassé une vitesse minimale et/ou qu'il n'existe aucune accélération positive ou négative du véhicule à moteur.

4. Procédé selon la revendication 3, caractérisé par le fait qu'en présence d'une accélération positive ou négative du véhicule à moteur la régulation se fait en fonction du premier signal de valeur prescrite, filtré.

5. Procédé selon la revendication 4, caractérisé par le fait qu'après commutation pour passer du premier signal de valeur prescrite, filtré, au troisième signal de valeur prescrite, filtré, et inversement, se fait une adaptation du signal de valeur prescrite nouvellement défini sur le signal de valeur prescrite défini en dernier lieu.

6. Procédé selon au moins l'une des revendications précédentes, caractérisé par le fait qu'en présence d'une accélération positive ou négative croissante du véhicule à moteur, la première constante de temps de filtre de la formation de la première valeur moyenne passe à des durées plus brèves et qu'en présence d'une accélération positive ou négative décroissante du véhicule à moteur, la première constante de temps de filtre passe à des durées plus longues.

7. Dispositif de régulation de la portée des phares d'un véhicule à moteur, comportant un émetteur de position de l'essieu avant et un émetteur de position de l'essieu arrière qui forment des signaux en fonction de la position de la carrosserie du véhicule par rapport à l'essieu avant et à l'essieu arrière, comportant un premier filtre qui procède à la formation d'une première valeur moyenne des valeurs prescrites ainsi qu'un régulateur qui, en fonction des valeurs prescrites, filtrées, règle la position d'éléments réglants pour positionner la portée des phares du véhicule à moteur, dispositif caractérisé par le fait que l'organe (S) de formation de la valeur prescrite est relié à un premier filtre (F1) qui présente une première constante de temps de filtre, que l'organe (S) de formation de la valeur prescrite est relié à un second filtre (F2) qui présente une seconde constante de temps de filtre, brève, que l'organe (S) de formation de la valeur prescrite est relié à un troisième filtre (F3) qui présente une troisième constante de temps de filtre, longue, que le premier filtre (F1) et le troisième filtre (F3) peuvent, par l'intermédiaire d'un organe de commutation (SE), être reliés avec le régulateur (R), que le second filtre (F2) et le troisième filtre (F3) sont reliés à un soustracteur (SU), que le soustracteur (SU) est relié à un organe (K) de reconnaissance de virage et qu'en présence d'une différence entre les signaux provenant du second filtre (F2) et du troisième filtre (F3), l'organe (K) de reconnaissance de virage inverse l'organe de commutation (SE) de façon que le troisième filtre (F3) soit relié avec le régulateur (R) et qu'en l'absence de la différence, le régulateur (R) est à nouveau relié avec le premier filtre (F1).

8. Dispositif selon la revendication 7, caractérisé par le fait que la première constante de temps de filtre est inférieure ou égale à la seconde constante de temps de filtre et que la troisième constante de temps de filtre est plus longue que la seconde constante de temps de filtre.

9. Dispositif selon la revendication 8, caractérisé par le fait que l'organe (K) de reconnaissance de virage est relié d'une part avec un organe (G) de formation d'un signal de vitesse et d'autre part avec un organe (B) de formation d'un signal de reconnaissance de virage est relié d'une part avec un organe (G) de formation d'un signal de vitesse et d'autre part avec un organe (B) de formation d'un signal

10. Dispositif selon la revendication 9, caractérisé par le fait que l'organe de commutation (SE) est relié avec l'organe (B) de formation du signal d'accélération qui, en présence d'une accélération du véhicule à moteur, relie le régulateur (R) avec le premier filtre (F1) par l'intermédiaire de l'organe de commutation (SE).

11. Dispositif selon au moins l'une des revendications précédentes, caractérisé par le fait que l'organe (B) de formation du signal d'accélération est relié avec le premier filtre (F1) et qu'en présence d'une accélération positive ou négative croissante du véhicule à moteur, la première constante de temps de filtre passe à des durées plus brèves et, en présence d'une accélération positive ou négative décroissante, passe à des durées plus longues.
